# EUROPEAN PATENT APPLICATION

(11) **EP 2 398 221 A1**
(43) Date of publication of application: **21.12.2011**
(21) Application number: 09839971.0
(22) Date of filing: 16.11.2009
(51) Int. Cl.: H04N 5/225, H04N 5/222

(54) **ELECTRONIC MAGNIFIER**

(30) Priority: 10.02.2009 JP 2009028925
(71) Applicant: Panasonic Corporation, Kadoma-shi Osaka 571-8501 (JP)
(72) Inventor: KIMURA, Hiroshi, Chuo-ku, Osaka 540-6207 (JP); TANAKA, Takuya, Chuo-ku, Osaka 540-6207 (JP)
(74) Representative: Grünecker, Kinkeldey, Stockmair & Schwanhäusser
(86) International application number: PCT/JP2009/006139
(87) International publication number: WO 2010/092648

(57) **Abstract**

A purpose of the invention is to provide an electronic magnifier that can facilitate grasping of a position when a display portion is moved in a magnified display state and can improve the visibility. An image capturing section 11 captures an image of a target object such as a character or the like, and a display section 17 displays the captured image of the target object. An operation state determining section 14 determines an operation state based on an acceleration of a device body detected by an acceleration sensor 13. A display control section 16 changes a display magnification of the captured image of the target object based on a determination signal from the operation state determining section 14. Here, when an acceleration being equal to or greater than a predetermined value is detected, it is determined that an operation of high speed moving is carried out and a display state is changed to a normal display state in which the display magnification is decreased. When a predetermined time period has elapsed or an acceleration being equal to or less than a predetermined value is detected, the display magnification is gradually increased so as to change the display state to a magnified display state.

## Description

### Technical Field

The present invention relates to an electronic magnifier that is mounted on a mobile terminal apparatus or the like and electronically magnifies and displays a target object.

### Background Art

An electronic magnifier (called as a digital loupe or the like) has been provided that captures an image of a target object by using an electronic camera having imaging elements and displays a magnified image on a display section having liquid crystal display elements or the like instead of an optical magnifying glass with the use of a lens so as to make a small character or the like easy to read. For example, patent document 1 discloses a magnifier tool which is integrally built in a mobile phone provided with a camera.

In such electronic magnifiers, in a case where a user reads characters in a magnified display state and advances to a next line after finishing a reading of a present line, the user needs to grasp an entire area in order to recognize a positional relationship between a present portion and a moving target portion when a displayed portion is changed. In addition, in order to let the user not to lose sight of the displayed portion where the user is currently reading, the displayed portion of the target object has to be moved slowly so as to allow the user to follow it. Consequently, a problem may arise that it takes a time to display a desired portion.

### Prior Art Documents

### Patent Documents

Patent Document 1: JP-A-2006-238094

### Summary of Invention

### Problems that the Invention is to Solve

In such a prior art electronic magnifier, when a user would like to change a displayed portion after finishing a reading of one line of characters in a magnified display state, the user can not grasp an entire area. For this reason, following problems may arise. In a case where a user moves the electronic magnifier at a high speed so as to rapidly change a displayed portion, the user possibly loses sight of a position on a target object. Also, in a case where the user moves the electronic magnifier at a low speed under a condition that the user grasps the position of the displayed portion, it takes some time to display a portion where the user would like to see.

In view of the above problems, a purpose of the invention is to provide an electronic magnifier capable of facilitating grasping of a position in a case where a displayed portion is moved in a magnified display state and capable of improving visibility.

### Means for solving the Problems

An electronic magnifier according to the invention includes an image capturing section that captures an image of a target object, a display section that displays the image captured by the image capturing section, an acceleration detecting section that detects an acceleration of a device body, and a control section that controls so as to change a display magnification of the image to be displayed on the display section in accordance with a detection result of the acceleration detecting section.
With this configuration, by changing the display magnification of the image depending on the detection result of the acceleration which is generated when the device body of the electronic magnifier is moved, it is possible to facilitate grasping of a position of a displayed portion and to improve the visibility even in a case where the display portion is moved during a time period of a magnified display state.

In addition, in the electronic magnifier according to the invention, the control section controls to decrease the display magnification when the acceleration detecting section detects that the acceleration is equal to or greater than a predetermined acceleration.
With this configuration, the display magnification is decreased when the acceleration equal to or greater than the predetermined acceleration is detected, and, for example, a magnified display state is switched to a normal display state in which the display magnification is decreased. Accordingly, it is possible to facilitate grasping of the entirety of the target object and the position of the displayed portion thereof.

Further, in the electronic magnifier according to the invention, the control section controls to increase the display magnification when the acceleration detecting section detects that the acceleration is equal to or less than a predetermined acceleration.
With this configuration, the display magnification is increased when the acceleration equal to or less than the predetermined acceleration is detected after the display magnification is decreased, and, for example, the normal display state in which the display magnification is decreased is gradually changed to the magnified display state. Accordingly, it is possible to allow a user to see the displayed image of the target object which is immediately and smoothly magnified to its original state.

Moreover, in the electronic magnifier according to the invention, the control section controls to increase the display magnification after the display magnification is decreased and a predetermined time period has elapsed after.
With this configuration, the display magnification is increasing after the display magnification is decreased and the predetermined time period has elapsed, and, for example, the normal display state in which the display magnification is decreased is gradually changed to the magnified display state. Accordingly, it is possible to allow a user to see the displayed image of the target object which is immediately and smoothly magnified to its original state.

Furthermore, in the electronic magnifier according to the invention, the control section starts measuring a time period from a time point when the acceleration equal to or greater than a predetermined acceleration is detected.
Furthermore, in the electronic magnifier according to the invention, the control section starts measuring a time period from a time point when the acceleration equal to or less than a predetermined acceleration is detected after the control section decreases the display magnification.

Furthermore, in the electronic magnifier according to the invention, the control section displays an area which is just previously displayed on the display section while applying a marking to the area when the control section decreases the display magnification.
With this configuration, the previously displayed area can be clearly and visually observed when the display magnification is changed so that it is possible to it is possible to facilitate grasping of the entirety of the target object and the position of the displayed portion thereof.

### Advantage of the Invention

In accordance with the invention, it is possible to provide an electronic magnifier that can facilitate grasping of a position in a case where a displayed portion is moved in a magnified display state and can improve the visibility.

### Brief Description of the Drawings

[Fig. 1] Fig. 1 is a block diagram showing a structure of an electronic magnifier according to a first embodiment of the invention.
[Fig. 2] Fig. 2 is a flowchart showing an operation of the electronic magnifier according to the first embodiment of the invention.
[Fig. 3] Fig. 3 is an operation explanatory view showing a relationship between a detected acceleration and a display magnification in an operation state of the first embodiment.
[Fig. 4] Fig. 4 is an operation explanatory view showing an example of a display state of the electronic magnifier of the embodiment during the operation time.
[Fig. 5] Fig. 5 is a block diagram showing a structure of an electronic magnifier according to a second embodiment of the invention.
[Fig. 6] Fig. 6 is a flowchart showing an operation of the electronic magnifier according to the second embodiment of the invention.
[Fig. 7] Fig. 7 is an operation explanatory view showing a relationship between a detected acceleration and a display magnification in an operation state of the second embodiment.

### Mode for Carrying Out the Invention

In following embodiments, a structural example of an electronic magnifier is shown that can be mounted on a mobile electronic apparatus such as a mobile terminal apparatus or the like represented by a mobile telephone apparatus or a mobile information terminal apparatus. The electronic magnifier of the embodiment can be constituted as a mobile terminal apparatus or the like having a function of an electronic magnifier.

This embodiment pays attention to the fact that in a case, for example, a user reads characters as a target object by using the electronic magnifier, when the user carries out changing a line in order to read a next line after finishing a reading of one line in a magnified display state, movement of the magnifier from the end of the line to the top of the line generates an acceleration equal to or greater than a predetermined acceleration. Thus, in a case where the acceleration equal to or greater than a predetermined value is detected in the magnified display state by utilizing the acceleration caused by the movement of the magnifier at a time when the displayed portion is changed, normal displaying in a non-magnification state in which the display magnification is returned to its original display magnification or in a state in which the display magnification is decreased, is performed. As a result, a wide area is displayed so as to enable grasping of the entirety of the target object.

In a case where the normal displaying is performed by detecting the acceleration equal to or greater than a predetermined value, a current operation state is determined based on a detected value of the acceleration when the display state is changed to the magnified display state again, and the display state is gradually changed to the magnified display state so that focusing to a next displayed portion is made smooth.

Meanwhile, in the embodiment, the example is described by assuming a case where an image of characters in two or more lines as a target object is magnified and displayed, but the target object is not limited thereto, and an image of a map, a photo or the like can be similarly applied.

### (First embodiment)

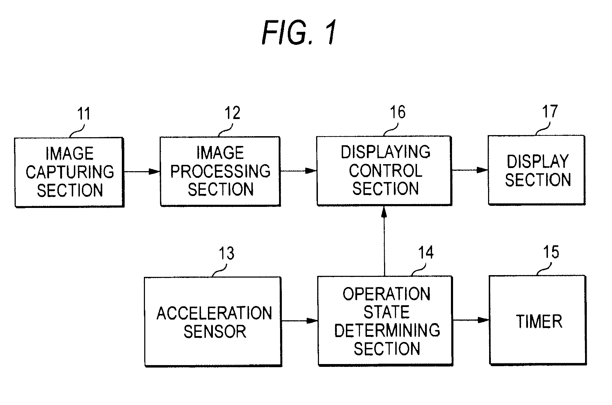

Fig. 1 is a block diagram showing a structure of an electronic magnifier according to a first embodiment of the invention. The electronic magnifier includes an image capturing section 11, an image processing section 12, an acceleration sensor 13, an operation state determining section 14, a timer 15, a displaying control section 16, and a display section 17.

The image capturing section 11 has an imaging lens and a CMOS or CCD image capturing element, and obtains a captured image of a target object by imaging a subject. The image processing section 12 applies various image processes to a captured image signal output from the image capturing section 11 so as to generate an image signal of the captured image of the target object.

The acceleration sensor 13 is adapted to detect an acceleration of a device body of its own device including the image capturing section 11 to output an acceleration detection signal. The operation state determining section 14 determines whether an acceleration detected by the acceleration sensor 13 is greater or smaller than a predetermined value so as to determine an operation state of the device. For example, in a case where the detected acceleration is equal to or greater than a predetermined value, it is determined that an operation of moving the device body at a high speed is carried out in order to change a displayed portion. The timer 15 is adapted to measure a time period in a case of a predetermined state, and measures a time period from a time point when the operation state determining section 14 determines that the acceleration equal to or greater than a predetermined value is detected. The operation state determining section 14 determines whether or not a predetermined time period has elapsed based on a measured time period of the timer 15.

The displaying control section 16 performs a process of enlarging or reducing an image signal output from the image processing section 12 based on a determination signal output from the operation state determining section 14 and changes a display magnification of a captured image of the target object. The display section 17 has a display device such as a liquid crystal display or the like and performs displaying of the image of the target object captured by the image capturing section 11 based on the display image signal output from the displaying control section 16.

Each of the image processing section 12, the operation state determining section 14 and the displaying control section 16 is constituted by a processor, a memory and the like for performing processes of operations of the entirety of the device and controlling thereof and operates in accordance with a predetermined program so as to achieve each function. Here, the operation state determining section 14 and the displaying control section 16 achieve a function of a control section for changing a display magnification depending on a detected result of an acceleration.

In the first embodiment, in a case where an acceleration equal to or greater than a predetermined value is detected in the magnified display state in which the captured image of the target object is magnified, it is determined that an operation of high speed moving is carried out, and then the display state is changed to a normal display state in which the display magnification is decreased. After a predetermined time period has elapsed, the display magnification is gradually increased so as to change the display state to the magnified display state.

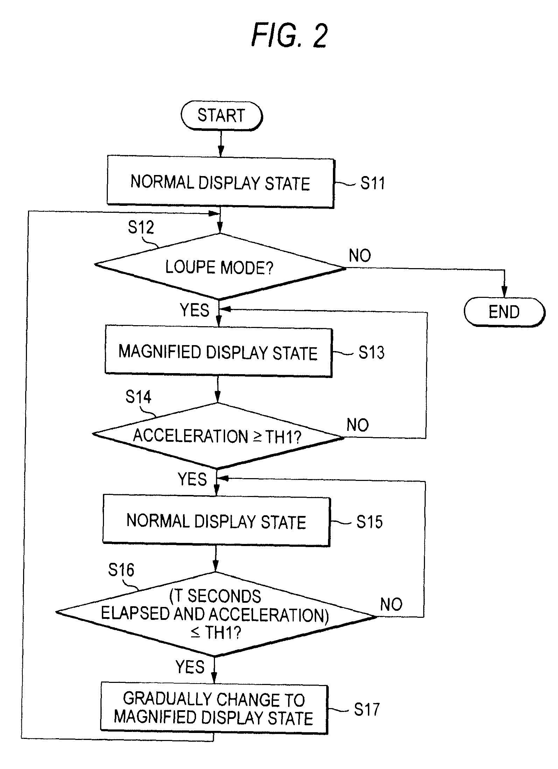

Fig. 2 is a flowchart showing an operation of the electronic magnifier according to the first embodiment of the invention. Here, operations of the displaying control section 16 and the operating state determining section 14 are mainly described. In an initial state, the display control section 16 keeps the display magnification of the input captured image to leave it as it is, and this state is the normal display state (step S11). The display control section 16 determines whether or not the electronic magnifier is in a loupe mode for functioning magnification displaying (step S12). When it is not in the loupe mode, the process is completed. When it is in the loupe mode, the process proceeds to a next process. In the case of the loupe mode, the displaying control section 16 increases the display magnification of the input captured image to a predetermined magnification so as to change the display state to the magnified display state (step S13).

Next, the operation state determining section 14 determines whether or not the acceleration detected by the acceleration sensor 13 is equal to or greater than a predetermined threshold value TH1 (step S14). Here, when the acceleration is less than the threshold value TH1, it is determined that an operation of high speed moving is not carried out and the process is returned to the step S13 so as to continue the magnified display state. When the acceleration is equal to or greater than the threshold value TH1, the operation state determining section 14 determines that the operation of high speed moving is carried out, and the displaying control section 16 decreases the display magnification of the input captured image to a predetermined magnification or returns to the initial magnification so as to change the display state to the normal display state (step S15). When the acceleration equal to or greater than the threshold value TH1 is detected, the operation state determining section 14 starts measuring a time period of the timer 15. Meanwhile, the measuring of the time period by the timer 15 can be started at a time point when the acceleration equal to or less than a predetermined value is detected after decreasing the display magnification instead of a time point when the acceleration equal to or greater than the threshold value TH1 is detected.
In addition, when the magnification displaying is switched to the normal displaying, the displaying control section 16 can perform the displaying by marking the position of the displayed portion at the change of the display magnification while applying a frame to an area which is just previously displayed in the magnified display state.

The operation state determining section 14 determines whether or not a predetermined time period of T seconds has elapsed and whether or not the acceleration is equal to or greater than the threshold value TH1 (step S16). Here, the process is returned to the step S15 and the normal display state is continued until the predetermined time period of T seconds has elapsed. In a case where the acceleration is more than the threshold value TH1, it is determined that the operation of the high speed moving is continued, the process is returned to the step S15 and the normal display state is continued. In a case where the acceleration is equal to or less than the threshold value TH1 in the step S16, the operation state determining section 14 determines that the operation of the high speed moving is completed and the displaying control section 16 gradually increases the display magnification of the input captured image to a predetermined magnification so as to change the display state to the magnified display state (step S17). After that, the process is returned to the process of step 12.

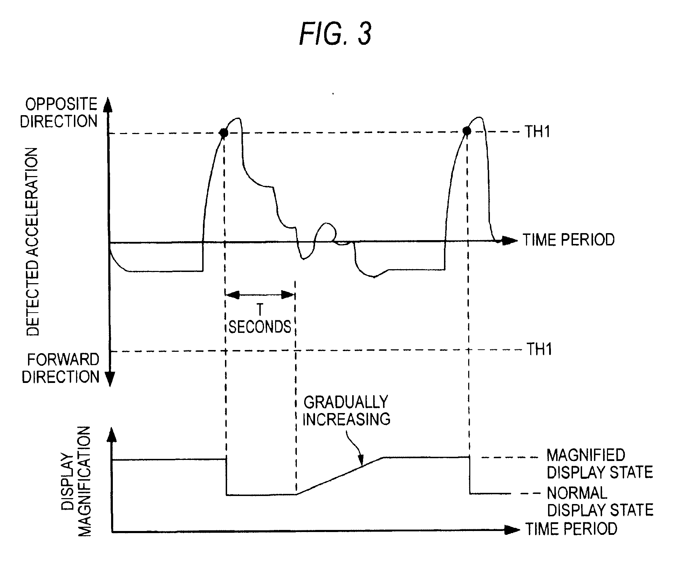

Fig. 3 is an operation explanatory view showing a relationship between the detected acceleration and the display magnification in an operation state of the first embodiment. Fig. 3 shows an example of changes of the detected acceleration and the display magnification with respect to a lapse of time when a user moves the electronic magnifier along target characters while the user reads the characters one line by one line.

When an operation of high speed moving for changing a line from an end of a current line to a top of a next line is carried out in a state of performing the magnification displaying in the loupe mode, a large acceleration is generated in a predetermined direction (in Fig. 3, the opposite direction of the arrangement direction of the characters). When the operation state determining section 14 determines that the detected acceleration is equal to or greater than the threshold TH1, the displaying control section 16 decreases the display magnification so as to change the magnified display state to the normal display state. After that, when the operation state determining section 14 determines that the predetermined time period of T seconds has elapsed and the detected acceleration is equal to or less than the threshold value, the displaying control section 16 gradually increases the display magnification to change the display state to the magnified display state.

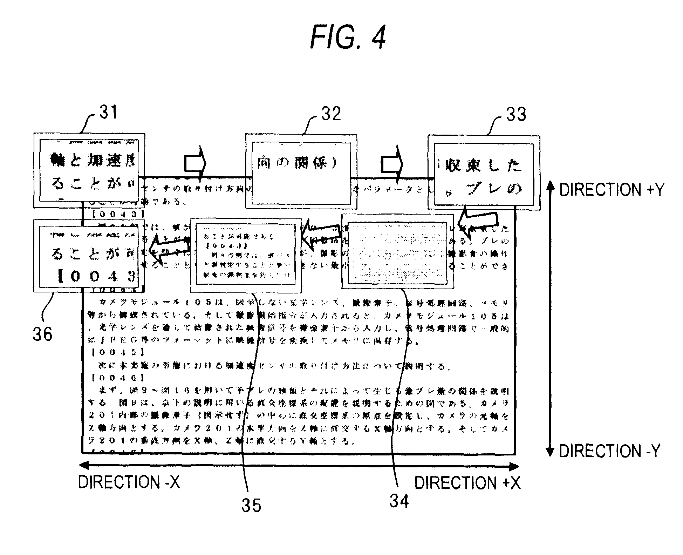

Fig. 4 is an operation explanatory view showing an example of the display state of the electronic magnifier of the embodiment during the operation time. In Fig. 4, a lateral direction of the target object of the arranged characters (a character arrangement direction) is represented by a direction X, and a longitudinal direction (a line direction of the plurality of lines) is represented by a direction Y. In a case where the electronic magnifier is moved slowly along the arrangement of the characters in the loupe mode, the magnification displaying in which characters at each of peripheries of respective current positions are magnified, is performed as shown by reference numerals 31, 32 and 33. When an operation of high speed moving is carried out in order to move the electronic magnifier from the position of the end of the current line to the top of the next line as shown by reference numeral 33, the acceleration equal to or greater than a predetermined value is detected and the display state is changed to the normal display state in which the display magnification is decreased as shown by reference numeral 34 so that grasping of the entirety can be facilitated. After that, the display state is gradually changed to the magnified display state as shown by reference numerals 35 and 36, and a magnified image of the target object is displayed at a position, i.e., the top of the line to which the user next would like to pay attention. Therefore, the user can move the electronic magnifier from the end of the current line to the top of the next line by maintaining good visibility and operability, and can restart reading of magnified characters.

Thus, in the embodiment, in a case where the detected acceleration becomes equal to or greater than the threshold value TH1 in the magnified display state, it is determined that the operation of high speed moving is carried out, the display state is returned to the normal display state from the magnified display state, and then the display state is gradually changed to the magnified display state after the time period of T seconds has elapsed from a time point of changing to the normal display state. With this, by using the operation of high speed moving for changing the displayed portion such as changing of the line, the display state is changed to the normal display state based on the acceleration generated at that time so that a wide area such as the entirety of the target object can be displayed and the user can naturally grasp the entirety of the target object or the position of the displayed portion. In addition, by gradually changing the display state to the magnified display state after the predetermined time period has elapsed, the user can see, without feeling a waiting time, the image of the target object which is immediately and smoothly magnified in a natural sense and is displayed in its original state. Therefore, the user can carry out the operation of high speed moving such as high speed scrolling without losing sight of the displayed portion in the magnified display state. The display state is returned to the original magnified display state after the operation of high speed moving so that it is possible to achieve good visibility and operability.

### (Second embodiment)

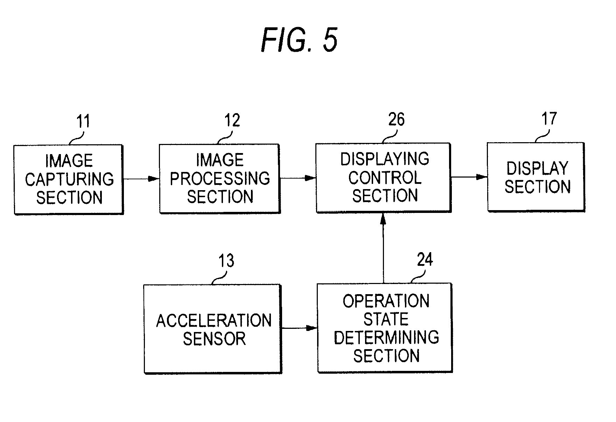

Fig. 5 is a block diagram showing a structure of an electronic magnifier according to a second embodiment of the invention. The second embodiment is an example obtained by modifying a part of the first embodiment. Comparing to the first embodiment shown in Fig. 1, the magnifier does not include a timer, and a part of each of operations of an operation state determining section 24 and a displaying control section 26 is different from that of the first embodiment. Other than the above parts are similar to those of the first embodiment so that the descriptions are omitted.

The operation state determining section 24 determines whether an acceleration detected by the acceleration sensor 13 is more or less than a predetermined first threshold value and a predetermined second threshold value so as to determine an operation state of the device. In a case where, for example, the detected acceleration is equal to or greater than the first threshold value, it is determined that the operation of moving the device body at a high speed in order to change the displayed portion is carried out. In a case where the acceleration is equal to or less than the second threshold value, it is determined that the device body is stopped or moved slowly. The displaying control section 26 performs a process of enlarging or reducing an image signal output from the image processing section 12 based on a determination signal output from the operation state determining section 24 so as to change the display magnification of the captured image of the target object.

In the second embodiment, in a case where the acceleration equal to or greater than the predetermined first threshold value is detected during the magnified display state in which the captured image of the target object is magnified, it is determined that the operation of high speed moving is carried out, and then the display state is changed to the normal display state in which the display magnification is decreased. In a case where the acceleration equal to or less than the predetermined second threshold value is detected, the display magnification is gradually increased so as to change the display state to the magnified display state.

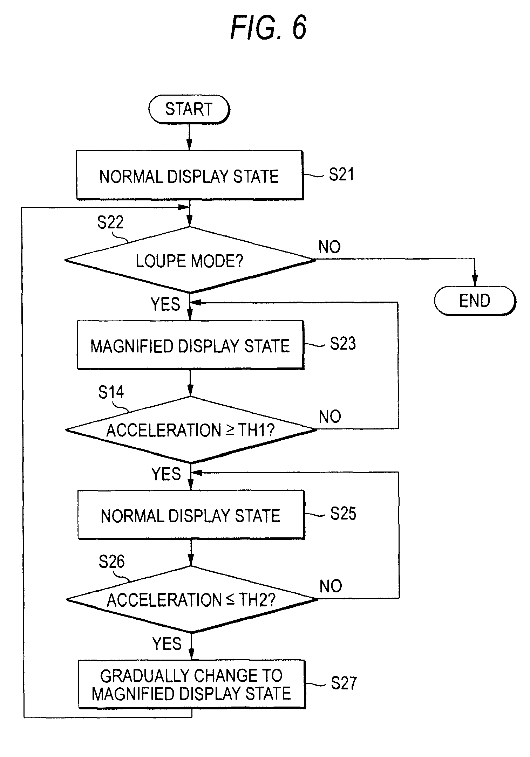

Fig. 6 is a flowchart showing an operation of the electronic magnifier according to the second embodiment of the invention. Here, operations of the displaying control section 26 and the operating state determining section 24 are mainly described. In an initial state, the display control section 26 keeps the display magnification of the input captured image, and this display state is the normal display state (step S21). The display control section 26 determines whether or not the electronic magnifier is in the loupe mode for functioning the magnification displaying (step S22). When it is not in the loupe mode, the process is completed. When it is in the loupe mode, the process proceeds to a next process. In the case of the loupe mode, the displaying control section 26 increases the display magnification of the input captured image to a predetermined magnification to change the display state to the magnified display state (step S23).

Next, the operation state determining section 24 determines whether or not the acceleration detected by the acceleration sensor 13 is equal to or greater than a predetermined threshold value TH1 (step S24). Here, in a case where the acceleration is less than the first threshold value TH1, it is determined that an operation of high speed moving is not carried out and the process is returned to the step S23 so as to continue the magnified display state. In a case where the acceleration is equal to or greater than the first threshold value TH1, the operation state determining section 24 determines that the operation of high speed moving is carried out, and the displaying control section 26 decreases the display magnification of the input captured image to a predetermined magnification or returns to the initial magnification so as to change the display state to the normal display state (step S25). When the magnification displaying is changed to the normal displaying, the displaying control section 26 can perform the displaying by applying a marking to the position of the displayed portion at the change of the display magnification while applying a frame to an area which is just previously displayed in the magnified display state.

After that, the operation state determining section 24 determines whether or not the detected acceleration is equal to or less than a predetermined second threshold value TH2 (step S26). Here, in a case where the acceleration is equal to or greater than the predetermined second threshold value TH2, it is determined that the operation of high speed moving is continued, the process is returned to the step S25 and the normal display state is continued. In a case where the acceleration is equal to or less than the second threshold value TH2 in the step S26, the operation state determining section 24 determines that the operation of high speed moving is completed and the displaying control section 26 gradually increases the display magnification of the input captured image to a predetermined magnification so as to change the display state to the magnified display state (step S27). After that, the process is returned to the process of the step 22. Meanwhile, measuring of a time period may be started at a time point when the acceleration equal to or less than the second threshold TH2 is detected, and the display magnification may be gradually increased so as to change the display state to the magnified display state after a predetermined time period has elapsed from when the detected acceleration becomes equal to or less than the second threshold TH2.

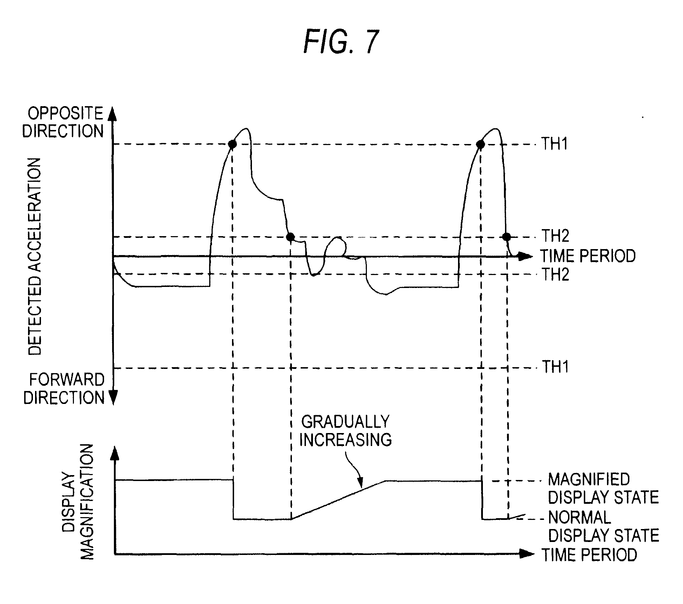

Fig. 7 is an operation explanatory view showing a relationship between the detected acceleration and the display magnification in the operation state of the second embodiment. Fig. 7 shows an example of changes of the detected acceleration and the display magnification with respect to a lapse of time when the electronic magnifier is moved along target characters while the user reads the characters one line by one line similarly to the case of Fig. 3.

When an operation of high speed moving for changing a line from an end of a current line to a top of a next line is carried out in a state of performing the magnification displaying in the loupe mode, a large acceleration is generated in a predetermined direction (in Fig. 7, the opposite direction of the arrangement direction of the characters). When the operation state determining section 24 determines that the detected acceleration is equal to or greater than the first threshold value TH1, the displaying control section 26 decreases the display magnification so as to change the display state from the magnified display state to the normal display state. After that, when the operation state determining section 24 determines that the detected acceleration is equal to or less than the second threshold value TH2, the displaying control section 26 gradually increases the display magnification so as to change the display state to the magnified display state.

Thus, in the embodiment, in a case where the detected acceleration becomes equal to or greater than the first threshold value in the magnified display state, it is determined that the operation of high speed moving is carried out and the magnified display state is returned to the normal display state. After that, in a case where the detected acceleration becomes equal to or less than the second threshold value TH2, the display state is gradually changed to the magnified display state. With the above, the user can carry out the operation of high speed moving such as high speed scrolling without losing sight of the displayed portion in the magnified display state and the display state is returned to the original magnified display state after the operation of high speed moving similarly to the case of the first embodiment. Accordingly, it is possible to achieve good visibility and operability.

Meanwhile, the invention is not limited to the described embodiments, and various changes or modifications made by a person having ordinary skill in the art based on the descriptions of the specification and well known techniques are included in the scope of the claims. The structural components in the embodiments can be combined in various ways without departing from the spirit of the invention.

While the embodiment shows the example in which the acceleration in the direction opposite to the arrangement direction of the characters is detected in the detection of the acceleration, it is possible to detect acceleration in a direction the same as the arrangement direction of the characters. In addition, in a case of an image such as, for example, a map, a photo or the like, the acceleration of not only one direction but also arbitrary directions on a two dimensional face can be detected so as to control the display magnification, thereby achieving a similar implementation.

This application is based on Japanese Patent Application (JP-2009-028925) filed on February 10, 2009, the contents of which are incorporated herein by reference.

### Industrial Applicability

The invention has an advantage in which it is possible to facilitate grasping of the position when the displayed portion is moved in a magnified display state and the visibility can be improved. The invention is convenient for the electronic magnifier which is mounted on a mobile terminal apparatus or the like and is adapted to electrically magnify and display a target object.

### Description of Reference Numerals and Signs

- 11: image capturing section
- 12: image processing section
- 13: acceleration sensor
- 14, 24: operation state determining section
- 15: timer
- 16, 26: displaying control section
- 17: display section

## Claims

1. An electronic magnifier comprising:
an image capturing section that captures an image of a target object;
a display section that displays the image captured by the image capturing section;
an acceleration detecting section that detects an acceleration of a device body; and
a control section that controls to change a display magnification of the image to be displayed on the display section in accordance with a detected result of the acceleration detecting section.

2. The electronic magnifier according to claim 1, wherein the control section controls to decrease the display magnification when the acceleration detecting section detects that the acceleration is equal to or greater than a predetermined acceleration.

3. The electronic magnifier according to claim 2, wherein the control section controls to increase the display magnification when the acceleration detecting section detects that the acceleration is equal to or less than a predetermined acceleration after the control section decreases the display magnification.

4. The electronic magnifier according to claim 2, wherein the control section controls to increase the display magnification after the control section decreases the display magnification and a predetermined time period has elapsed.

5. The electronic magnifier according to claim 4, wherein the control section starts measuring a time period from a time point when the acceleration equal to or greater than the predetermined acceleration is detected.

6. The electronic magnifier according to claim 4, wherein the control section starts measuring a time period from a time point when the acceleration equal to or less than a predetermined acceleration is detected after the control section decreases the display magnification.

7. The electronic magnifier according to claim 2, wherein the control section displays an area which is just previously displayed on the display section while applying a marking to the area when the control section decreases the display magnification.
